(19)

**Europäisches Patentamt**

**European Patent Office**

**Office européen des brevets**

(11) **EP 3 803 636 B1**

(12) **FASCICULE DE BREVET EUROPEEN**

(45) Date de publication et mention
de la délivrance du brevet:
**11.01.2023 Bulletin 2023/02**

(21) Numéro de dépôt: **19790626.6**

(22) Date de dépôt: **09.07.2019**

(51) Classification Internationale des Brevets (IPC):
**G06F 17/14** *(2006.01)* **G06F 9/44** *(2018.01)*

(52) Classification Coopérative des Brevets (CPC):
**G06F 9/44; G06F 17/144**

(86) Numéro de dépôt international:
**PCT/FR2019/051697**

(87) Numéro de publication internationale:
**WO 2020/012105 (16.01.2020 Gazette 2020/03)**

(54) **PROCESSEUR NTT INCLUANT UNE PLURALITE DE BANCS DE MEMOIRES**

NTT-PROZESSOR MIT MEHREREN SPEICHERBANKEN

NTT PROCESSOR INCLUDING A PLURALITY OF MEMORY BANKS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.07.2018 FR 1856351**

(43) Date de publication de la demande:
**14.04.2021 Bulletin 2021/15**

(73) Titulaire: **Commissariat à l'énergie atomique
et aux énergies alternatives
75015 Paris (FR)**

(72) Inventeurs:
• **CATHEBRAS, Joël
91120 PALAISEAU (FR)**
• **CARBON, Alexandre
91300 MASSY (FR)**
• **SIRDEY, Renaud
78720 CERNAY-LA-VILLE (FR)**

• **VENTROUX, Nicolas
91190 GIF-SUR-YVETTE (FR)**

(74) Mandataire: **Brevalex
56, Boulevard de l'Embouchure
B.P. 27519
31075 Toulouse Cedex 2 (FR)**

(56) Documents cités:
**US-A1- 2015 242 365**

• **COUSINS DAVID BRUCE ET AL: "Designing an
FPGA-Accelerated Homomorphic Encryption
Co-Processor", IEEE TRANSACTIONS ON
EMERGING TOPICS IN COMPUTING, IEEE, USA,
vol. 5, no. 2, 1 avril 2017 (2017-04-01), pages
193-206, XP011651948, DOI:
10.1109/TETC.2016.2619669**

**Description**

**DOMAINE TECHNIQUE**

La présente invention concerne le domaine des processeurs NTT (*Number Theoretic Transform*). Elle trouve notamment application dans la cryptographie sur réseau euclidien, en particulier dans la cryptographie homomorphe.

**ÉTAT DE LA TECHNIQUE ANTÉRIEURE**

La transformée en nombres entiers ou NTT (*Number Theoretic Transform*) est connue depuis les années 70 et a retrouvé récemment un intérêt dans les applications cryptographiques.

On rappelle qu'une transformée en nombres entiers est l'équivalent d'une transformée de Fourier dans un corps de Galois de caractéristique $q$, $GF(q)$, la racine primitive d'une transformée de Fourier d'ordre $N$ dans $\mathbb{C}$, à savoir $e^{j\frac{2\pi}{N}}$, étant remplacée par une racine $N$ ème de l'unité du corps $GF(q)$. Ainsi, $N$ est le plus petit entier $n$ non nul tel que $\psi^n = 1$. La transformée en nombres entiers d'une séquence $\mathbf{a} = a_0,...,a_{N-1}$ de $N$ éléments de $GF(q)$ est définie par une séquence $\mathbf{A} = A_0,...,A_{N-1}$ telle que :

$$A_k = \sum_{n=0}^{N-1} a_n \psi^{nk} \tag{1}$$

où les opérations d'addition et de multiplication sont celles du corps $GF(q)$.

Il convient de noter que $\psi$ n'est pas nécessairement une racine primitive de $GF(q)$ , autrement dit son ordre n'est pas nécessairement égal à l'ordre $q$-1 du groupe multiplicatif de $GF(q)$ mais que l'ordre $N$ de $\psi$ est nécessairement un diviseur de $q$-1.

Si $N$ et $q$ sont premiers entre eux, il existe un inverse $N^{-1}$ dans le corps de Galois $GF(q)$ et l'on peut définir la transformée en nombres entiers inverse ou INTT (*Inverse NTT*) par :

$$a_n = N^{-1} \sum_{k=0}^{N-1} A_k \psi^{-nk} \tag{2}$$

les inverses $\psi^{-nk}$ existant dans la mesure où $GF(q)$ est un corps.

Par analogie avec la transformée de Fourier, les éléments $\psi^{nk}$ et $\psi^{-nk}$ apparaissant dans l'expression (1) ou (2) sont dénommés facteurs de rotation.

De manière générale, la caractéristique $q$ d'un corps est de la forme $q = p^m$ où $p$ est un nombre premier et $m$ est un entier non nul. Nous considérerons dans la suite les corps finis $GF(q)$ dont la caractéristique est un nombre premier $p$ , dont on sait qu'ils sont isomorphes à $\mathbb{Z}_p = \mathbb{Z} / p\mathbb{Z}$ .

Une présentation générale de la NTT pourra être trouvée dans l'article de J.M. Pollard « The fast Fourier transform in a finite field » publié dans Mathematics of Computation, vol. 25, N° 114, avril 1971, pp. 365-374.

La transformée NTT est utilisée en arithmétique RNS (*Residue Number System*) dans le contexte de la cryptographie sur réseau euclidien où elle permet de simplifier considérablement la multiplication de polynômes de degrés élevés et de grands coefficients.

En effet, on sait que la multiplication de deux polynômes nécessite de calculer la convolution de la séquence des coefficients du premier polynôme avec la séquence des coefficients du second polynôme. En se plaçant dans l'espace dual, c'est-à-dire après NTT, la multiplication des polynômes ne nécessite plus qu'une simple multiplication un à un des coefficients des séquences transformées. Il suffit alors d'effectuer une INTT de la séquence résultante pour obtenir les coefficients de la séquence correspondant au produit des deux polynômes.

Cette accélération du calcul polynomial peut s'appliquer à une représentation RNS des polynômes. Plus précisément, si l'on considère un polynôme $f(x) = \sum_{i=0}^{N-1} \alpha_i x^i$ , on peut lui faire correspondre un ensemble $L$ de polynômes

$$f^{(\ell)}(x) = \sum_{i=0}^{N-1} \alpha_i^{(\ell)} x^i \quad \text{où} \quad \alpha_i^{(\ell)} = \alpha_i$$

mod $p_\ell$ et $p_\ell$, $\ell = 0,..., L$ - 1 sont des entiers premiers entre eux (et généralement premiers) choisis relativement petits. L'ensemble $\{p_0,...,p_{L-1}\}$ est dénommé base RNS.

Cette représentation des coefficients et, par voie de conséquence, du polynôme associé, est une application immédiate du Théorème des Restes Chinois ou CRT (*Chinese Remainders Theorem*). On notera dans la suite

$$CRT(\alpha_i) = \left\{ \alpha_i^{(0)},...,\alpha_i^{(L-1)} \right\}$$

et $CRT(f) = \{f^{(0)},...,f^{(L-1)}\}$.

Réciproquement, à une représentation RNS $f^{(\ell)}(x) = \sum_{i=0}^{N-1} \alpha_i^{(\ell)} x^i$, $\ell = 0,.., L$ - 1 on peut associer un polynôme

$f = ICRT\{f^{(0)},..., f^{(L-1)}\}$ défini par $f(x) = \sum_{i=0}^{N-1} \alpha_i x^i$ où les coefficients $\alpha_i = ICRT\left\{\alpha_i^{(0)},...,\alpha_i^{(L-1)}\right\}$ sont donnés par :

$$\alpha_i = \sum_{\ell=0}^{L-1} \left(\frac{P}{p_\ell}\right)\left(\left(\frac{P}{p_\ell}\right)^{-1}.\alpha_i^{(\ell)} \bmod p_\ell\right) \bmod P \qquad (3)$$

et où $P = \prod_{\ell=0}^{L-1} p_\ell$ est le produit des nombres premiers utilisés pour la décomposition RNS des coefficients.

Ainsi, la multiplication de deux polynômes de degré $N$, $f(x) = \sum_{i=0}^{N-1} \alpha_i x^i$ et $g(x) = \sum_{i=0}^{N-1} \beta_i x^i$ peut être ramenée par représentation RNS et transformée NTT à $N.L$ multiplications des coefficients $A_k^{(\ell)} = \sum_{i=0}^{N-1} \alpha_i^{(\ell)}\left(\psi_\ell\right)^{ik}$ et $B_k^{(\ell)} = \sum_{i=0}^{N-1} \beta_i^{(\ell)}\left(\psi_\ell\right)^{ik}$, $k = 0,...,N$ -1 dans l'espace dual où $\psi_\ell$ est une $N$ ème racine de l'unité du corps $\mathbb{Z}_{p_\ell}$ et $\alpha_i^{(\ell)}$, $\beta_i^{(\ell)}$ sont des éléments de $\mathbb{Z}_{p_\ell}$ obtenus par décomposition des coefficients $\alpha_i$ et $\beta_i$ dans la base RNS $\{p_0,...,p_{L-1}\}$. Il est ensuite possible de revenir à l'espace de départ au moyen d'une transformée inverse INTT de chaque séquence de coefficients $C_k^{(\ell)} = A_k^{(\ell)} B_k^{(\ell)}$, $k = 0,...,N-1$ pour obtenir les coefficients en représentation RNS $\gamma_k^{(\ell)} = N^{-1} \sum_{i=0}^{N-1} C_k^{(\ell)}\left(\psi_\ell\right)^{ik}$ puis les coefficients du polynôme produit $h(x) = f(x)g(x)$ par ICRT. Etant donné que le degré de $h(x)$ est $2N$, on peut considérer d'emblée des polynômes de degré $N'=2N$ (et donc des racines $N'$ ème de l'unité) en bourrant de $N$ zéros (*zero padding*) les $N$ coefficients de plus forts degrés de $f(x)$ et $g(x)$. Moyennant cette convention, on peut rester dans le même espace pour le polynôme produit et les polynômes $f(x)$ et $g(x)$ à multiplier.

On pourra trouver une description détaillée de l'application de la transformée NTT à la multiplication de polynômes en représentation CRT dans l'article de W. Dai et al. intitulé « Accelerating NTRU based homomorphic encryption using GPUs » publié dans Proc. of IEEE High Performance Extreme Computing Conference (HPEC), 2014, 9-11 Sept. 2014.

Une multiplication polynomiale utilisant une transformée NTT des coefficients de polynômes représentés dans une base RNS requiert de disposer des racines de l'unité $\psi_\ell$ des corps finis $\mathbb{Z}_{p_\ell}$ ainsi que de leurs puissances $(\psi_\ell)^n$, $n = 0,...,N$ - 1, tant pour le calcul de la transformée NTT des coefficients (en représentation RNS) des polynômes à multiplier que pour le calcul de la transformée INTT des coefficients (en représentation RNS) du polynôme produit dans l'espace dual.

Comme pour la FFT (algorithme de Cooley-Tukey), il a été proposé d'implémenter la transformée NTT au moyen d'une architecture en pipeline (traitement par flot), chaque étage effectuant une opération (radix) sur un bloc de base de taille $R$ (traditionnellement $R = 2$ ou $R = 4$). L'article de D.B. Cousins et al. intitulé « Designing an FGPA-accelerated homomorphic encryption coprocessor » publié dans IEEE Trans. on Emerging Topics in Computing., vol. 5, N°2, avril-juin 2017, pp. 193-206 présente une architecture de processeur NTT par flot reprenant une architecture classique radix-2 de FFT.

Toutefois, ce processeur NTT par flot nécessite de stocker en mémoire locale un nombre important d'ensembles de facteurs de rotation, correspondant aux différents corps finis intervenant dans une représentation RNS. Ces corps finis pouvant différer d'une représentation RNS à une autre, des mémoires ROM de grande taille sont nécessaires. À défaut, on pourrait prévoir de ne stocker que $L$ ensembles de facteurs de rotation correspondant à une représentation RNS spécifique mais alors le processeur NTT n'offrirait alors aucune flexibilité : une reprogrammation des mémoires serait nécessaire dès lors que l'on souhaiterait changer la base de représentation RNS.

La présente invention vise à proposer un processeur NTT par flot qui offre une grande flexibilité vis-à-vis des bases possibles de représentation RNS sans pour autant nécessiter des ressources importantes en mémoire locale.

## EXPOSÉ DE L'INVENTION

La présente invention est définie par un processeur NTT tel que donné par la revendication 1. Des modes de réalisation avantageux sont précisés dans les revendications dépendantes.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique l'architecture d'un processeur NTT par flot ;
La Fig. 2 représente de manière schématique l'architecture de processeur NTT par flot selon un mode de réalisation de l'invention ;
La Fig. 3 représente de manière schématique une opération d'écriture dans un banc de mémoires de la Fig. 2 ;
La Fig. 4 représente de manière schématique le fonctionnement de l'interface d'écriture au sein du processeur NTT de la Fig. 2;
La Fig. 5 représente de manière schématique une opération de lecture dans les bancs de mémoires de la Fig. 2 ;
La Fig. 6 représente de manière schématique un chronogramme des signaux de contrôle dans le processeur NTT de la Fig. 2.

## EXPOSÉ DÉTAILLÉ DE MODES DE RÉALISATION PARTICULIERS

Un processeur NTT par flot comprend essentiellement une pluralité d'étages de calcul, chaque étage comprenant un module de permutation adapté à effectuer une opération de permutation et un module de combinaison adapté à effectuer une opération de combinaison (radix-$R$ butterfly) de $R$ nombres entiers au moyen de facteurs de rotation (twiddle factors) appartenant à un corps $\mathbb{Z}_p = \mathbb{Z} / p\mathbb{Z}$ de caractéristique $p$ .

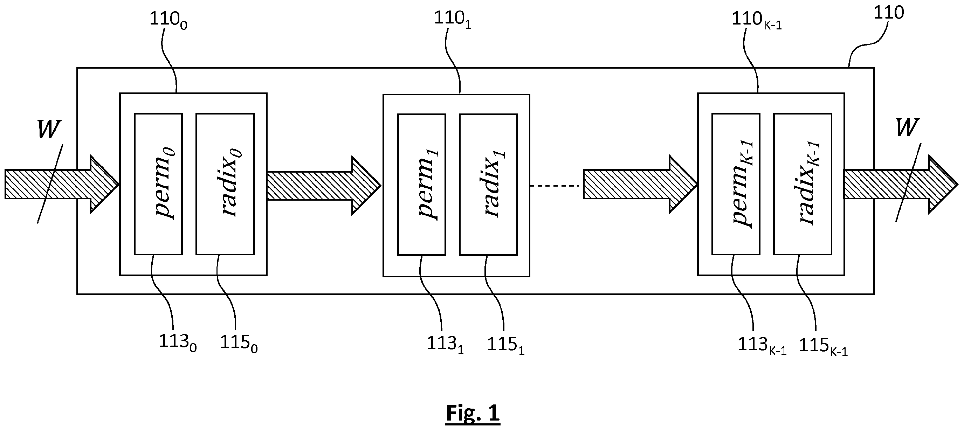

La Fig. 1 illustre de manière schématique l'architecture d'un processeur NTT par flot.

Les données d'entrée sont des entiers relatifs (éléments de $\mathbb{Z}$ ) et sont fournis par blocs de taille $W$ au processeur NTT, 100. En d'autres termes, $W$ est la largeur du chemin de données. Ainsi, si $N$ (ou le nombre de points) est la taille de la transformée NTT, et si un bloc est fourni au processeur à chaque cycle d'horloge , l'intégralité d'une séquence de N éléments, encore dénommée dans la suite N-séquence, sera reçue au bout du temps $T = N / W$ (comptabilisé en nombre de cycles), autrement dit le débit (des séquences de données) d'entrée est de $N / W.$

Le processeur NTT comporte une pluralité $K$ d'étages de traitement, $110_0,...,110_{K-1}$, arrangés en pipeline, 110, chaque étage $110_k$ comprenant un module de permutation $113_k$, suivi d'un module de combinaison, $115_k$, effectuant une opération de combinaison de $R$ entiers fournis par le module de permutation $113_k$ au moyen de $N / R^{K-k-1}$ facteurs de rotation (dans le cas d'une implémentation par décimation temporelle) ou $R^{K-k-1}$ (dans le cas d'une implémentation par décimation fréquentielle). Ainsi chaque étage est paramétré par un jeu de facteur de rotation associé.

Dans la suite de la présentation, nous supposerons par souci de simplification et sans perte de généralité que $R = W$ . En outre, la taille (ou nombre de points) $N$ de la transformée NTT est reliée au nombre d'étages du processeur par $K = \log_R(N)$.

Chaque module de permutation comprend des commutateurs et des retards (buffers FIFO) de manière à présenter simultanément les *R* entiers à combiner au module de combinaison suivant. L'architecture de ces modules de permutation a été décrite par exemple dans le brevet US-B-8321823.

Les modules de combinaison effectuent les opérations radix-*R* (comme pour une FFT) à l'aide des facteurs de rotation qui leur sont fournis, les calculs étant effectués dans le corps $\mathbb{Z}_p$.

Le débit à travers chaque étage du processeur NTT, c'est-à-dire le temps au bout duquel est traité une N-séquence de données par cet étage, est égal à *T* de manière à permettre une opération par flot.

Les N-séquences de données étant fournies au processeur NTT avec un débit *T* = *N* / *W,* le nombre maximum de N-séquences présentes à tout moment dans le processeur est $G = \lceil Lat\_NTT / T \rceil$ où *Lat_NTT* est la latence de traitement du processeur NTT exprimé en nombre de cycles d'horloge.

L'architecture du processeur NTT par flot selon la présente invention permet d'effectuer en pipeline des transformée NTT sur *L* ≤ *G* corps distincts, ce qui est particulièrement avantageux lorsque l'on doit effectuer des opérations en représentation RNS.

L'idée à la base de la présente invention est de permettre à chaque étage *k* = 0*, ..., K* du processeur NTT d'accéder au jeu de facteur de rotation $\Psi_k^\ell$ associé à cet étage et à la N-séquence de données actuellement traitée par cet étage, lesdits facteurs de rotation appartenant à $\Psi_\ell = \{(\psi_\ell)^n$ , *n* = 0,...,*N* - 1$\}$ où $\ell$ = 1,...,*L*, les transformées NTT sur les différents corps $\mathbb{Z}_{p_\ell}$ se déroulant simultanément sur des blocs de données au sein des étages successifs du processeur, l'accès des différents étages aux ensembles $\Psi_k^\ell$ étant réalisé de manière synchrone avec la progression des N-séquences de données d'un étage au suivant.

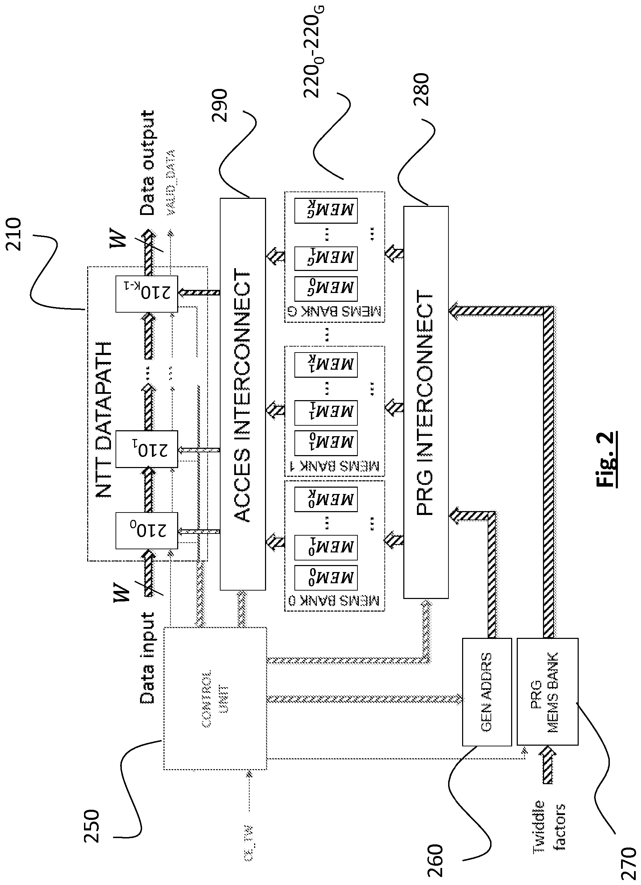

La Fig. 2 représente de manière schématique une architecture de processeur NTT par flot selon un mode de réalisation de l'invention.

Le processeur NTT comprend un module de contrôle 250, une pluralité *K* d'étages de traitement, $210_0,...,210_{K-1}$, arrangés en pipeline, 210, ces étages de traitement ayant la structure précédemment décrite en relation avec la Fig. 1. Les N-séquences de données sur lesquelles sont effectuées les NTT entrent par le premier étage $210_0$ sous forme d'une série de blocs de taille *W* avec un débit *T* = *N* /*W* (i.e. une N-séquence par intervalle de temps *T* ) et le résultat de chaque NTT est fourni par le dernier étage, $210_K$, sous forme d'un série de blocs de taille *W* , avec le même débit. Il est important de noter que la taille est commune à toutes les NTT effectuées par le processeur, quels que soient les corps dans lesquels elles sont calculées.

Les différents étages sont programmés à l'aide de *G*+1 bancs de mémoires $220_0,...,220_G$. Chaque banc de mémoires, $220_g$, comprend *K* mémoires, $MEM_k^g$ , d'indice *k* = 0,...,*K* - 1, chaque mémoire $MEM_k^g$ contenant le jeu de facteurs de rotation

$$\Psi_k^\ell$$

nécessaire au paramétrage (autrement dit à la programmation) de l'étage $210_k$ correspondant lorsque celui-ci est destiné à opérer dans le corps $\mathbb{Z}_{p_\ell}$ . En outre, le banc de mémoires $220_g$ stocke dans un registre (non représenté) la caractéristique $p_\ell$ du corps dans lequel les opérations de combinaison seront effectuées. Cette caractéristique est également fournie à l'étage $210_k$ de manière à ce que le module de combinaison de cet étage puisse effectuer les opérations (multiplication par un facteur de rotation, addition, soustraction) modulo $p_\ell$.

À chaque instant, un étage d'indice *k* donné accède à un unique banc de mémoires. Il convient de noter que les contenus des différents bancs de mémoires peuvent être différents ou identiques, selon que les transformées de NTT successives sont effectuées sur des corps différents ou identiques. Il est important de comprendre que chaque banc de mémoires est associé à une séquence de $\overline{N}$ = *N* / *W* blocs de données (de taille *W* ) qui chemine à travers les étages successifs du processeur NTT pour fournir une transformée NTT dans un corps $\mathbb{Z}_{p_\ell}$ . Lorsque ces $\overline{N}$ blocs passent dans un étage $210_k$, cet étage aura précédemment accédé à la mémoire d'indice *k* du banc $220_g$ contenant le jeu de facteurs de rotation

$$\Psi_k^{\ell},$$

pour être paramétré par ce jeu. Les $\overline{N}$ blocs suivants pourront faire l'objet d'une transformée dans le même corps $\mathbb{Z}_{p_\ell}$ ou dans un corps différent $\mathbb{Z}_{p_{\ell'}}$. Dans le premier cas, le banc de mémoires $220_{g+1}$ (si l'on suppose que $g < G$ ) contiendra les mêmes jeux facteurs de rotation

$$\Psi_k^{\ell}, \quad k = 0,...,K-1$$

que le banc de mémoires $220_g$. Dans le second cas, il contiendra les jeux de facteurs de rotation $\Psi_k^{\ell'}, \quad k = 0,...,K-1$ .

Chaque étage $210_k$ accède cycliquement aux mémoires d'indice $k$, $MEM_k^g$ , des bancs de mémoires $220_g$, $g = 0,...,G$. Il convient de noter que, lorsqu'un étage $210_k$ a été paramétré au moyen de la mémoire $MEM_k^G$ du banc de mémoire $220_G$ , il est ensuite paramétré à l'aide de la mémoire $MEM_k^0$ du banc de mémoires $220_0$ pour la séquence des $\overline{N}$ blocs suivants. Dans la présente implémentation, le nombre de bancs de mémoires ($G+1$) est supérieur d'une unité au nombre maximum ($G$) de séquences différentes simultanément présentes dans le processeur NTT de manière à permettre l'écriture des facteurs de rotation dans un banc de mémoires avant qu'une nouvelle séquence de $\overline{N}$ blocs ne s'engage dans le pipeline du processeur NTT.

Le module de contrôle 250 a notamment pour fonction de contrôler l'écriture des facteurs de rotation dans les bancs de mémoires $220_g$, $g = 0,...,G$ et la lecture de ces facteurs de rotation au sein des bancs de mémoires pour paramétrer les étages $210_k$, $k = 0, ..., K$ -1.

Plus précisément, le module de contrôle 250 commande le module de gestion de lecture 260, le module de gestion d'écriture, 270, l'interface d'écriture des bancs de mémoires, 280, ainsi que l'interface de lecture des bancs de mémoires, 290. Le module de contrôle 250 sélectionne individuellement les bancs de mémoires pour que chacun d'entre eux puisse être accédé en écriture ou en lecture.

Le module de gestion de lecture, 260 est chargé de la génération des adresses de lecture. Il comporte $K$ ports de sortie, chaque port de sortie d'indice $k$ fournissant l'adresse $addr_k$ à lire dans le banc de mémoires sélectionné pour paramétrer l'étage $210_k$ correspondant.

Le module de gestion d'écriture, 270, a tout d'abord pour fonction de générer une commande d'écriture $prg\_we_k$, $k = 0, ..., K$ -1 ainsi qu'une adresse d'écriture $prg\_addr_k$, $k = 0, ..., K$ - 1, pour chacune des mémoires du banc de mémoires. Seule la mémoire pour laquelle la commande d'écriture est activée est accédée en écriture à l'adresse $prg\_addr_k$ . Il est entendu que lorsqu'un banc de mémoire sélectionné n'est pas accédé en écriture, il peut être accédé en lecture.

Il a également pour fonction de fournir les facteurs de rotation, désignés par $prg\_data_k^{\ell}, \quad k = 0,...,K-1$ , qui seront respectivement écrits dans les mémoires du banc de mémoires sélectionné, ainsi que la caractéristique $p_\ell$ du corps à écrire dans le registre du banc de mémoires sélectionné.

Ces facteurs de rotation peuvent avoir été préalablement stockés dans une mémoire extérieure et être fournis aux bancs de mémoires, via un buffer FIFO prévu dans le module de gestion d'écriture, 270. Alternativement, les facteurs de rotation peuvent être fournis directement par un circuit de génération de facteurs de rotation comme celui décrit dans la demande FR1856340 déposée le même jour et incorporée ici par référence. On rappelle qu'un tel circuit est capable de fournir des facteurs de rotation par blocs de taille $W$ avec un débit $N$ / $W$.

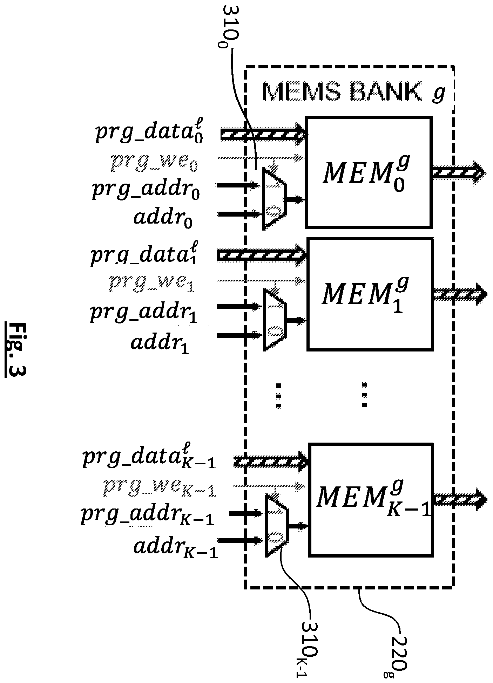

La Fig. 3 représente de manière schématique une opération d'écriture dans un banc de mémoire de la Fig. 2.

On a représenté sur cette figure le banc de mémoires $220_g$, supposé ici sélectionné par le module de contrôle pour l'opération d'écriture. Ce banc de mémoires contient les mémoires $MEM_k^g$ , $k = 0,...,K-1$ . Chaque mémoire $MEM_k^g$ reçoit sur son bus de données les facteurs de rotation successifs. Lorsque le facteur de rotation $prg\_data_k^{\ell}$

est présent sur le bus de données, le signal de commande d'écriture $prg\_we_k$ l'écrit à l'adresse $addr_k$ de la mémoire $MEM_k^g$. Plus précisément, le signal $prg\_we_k$ sélectionne à l'aide du multiplexeur $310_k$ l'adresse d'écriture entre $prg\_addr_k$ (adresse fournie par le module de gestion d'écriture) et l'adresse ($addr_k$ fournie par le module de gestion de lecture). La génération des adresses $prg\_addr_k$ est fonction de la distribution des facteurs de rotation

$$\Psi_k^\ell$$

au sein des différents blocs successifs fournis au module de gestion d'écriture. Au terme des $\overline{N}$ blocs, les jeux de facteurs de rotation

$$\Psi_k^\ell, \quad k = 0, ..., K-1,$$

sont progressivement présents dans les mémoires $MEM_k^g, k = 0, ..., K-1$.

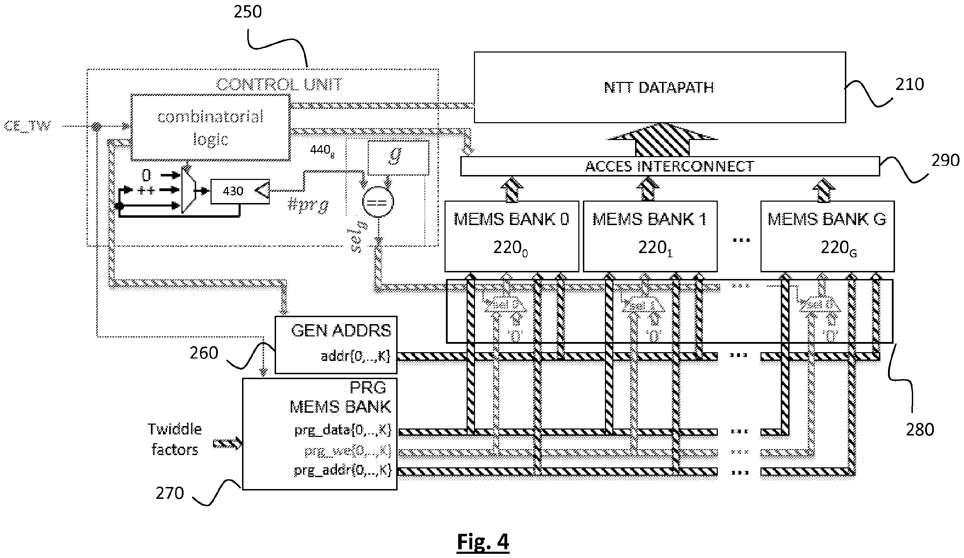

La Fig. 4 illustre de manière schématique le fonctionnement de l'interface d'écriture au sein du processeur NTT de la Fig. 2.

On a représenté à nouveau sur cette figure le pipeline d'étages de traitement 210, les bancs de mémoires $220_g, g = 0, ..., G$, le module de contrôle 250, le module de gestion de lecture 260, le module de gestion d'écriture, 270, l'interface d'écriture des bancs de mémoires, 280, ainsi que l'interface de lecture des bancs de mémoires, 290.

Le module de contrôle 250 comporte un compteur de bancs de mémoires en écriture, 430, qui est incrémenté à chaque fois que le signal $CE\_TW$ devient actif, c'est-à-dire à chaque fois qu'un nouvel ensemble de facteurs de rotation est fourni au module de gestion d'écriture 270. Lorsque le compteur 430 est à la valeur $G$, l'incrémentation suivante remet sa sortie à zéro. Autrement dit, les bancs de mémoires sont cycliquement adressés en écriture.

La sortie du compteur 430 est comparée aux valeurs $0, ..., G$ au moyen de $G + 1$ comparateurs $440_g, g = 0, ..., G$. Les sorties respectives de ces comparateurs fournissent les signaux $sel_g, g = 0, ..., G$. Si le signal $sel_g$ prend une première valeur logique (ici « 1 »), le banc de mémoires $220_g$ est sélectionné en écriture et s'il prend une seconde valeur logique (« 0 »), opposée à la première, ce banc de mémoires n'est pas sélectionné. Le signal $sel_g$ autorise la transmission des signaux de commande en écriture $prg\_we_k, k = 0, ..., K - 1$ au banc de mémoires sélectionné s'il est à une première valeur logique et inhibe cette transmission (par exemple au moyen d'une porte ET ou d'un multiplexeur) s'il est à une seconde valeur logique, opposée à la première. En d'autres termes, si le banc de mémoires $220_g$ est sélectionné par le module de contrôle, les signaux de commande en écriture $prg\_we_k, k = 0, ..., K - 1$ sont transmis aux différentes mémoires du banc de mémoires en question, sous la forme de signaux $mem_g\_prg\_we_k, k = 0, ..., K - 1$.

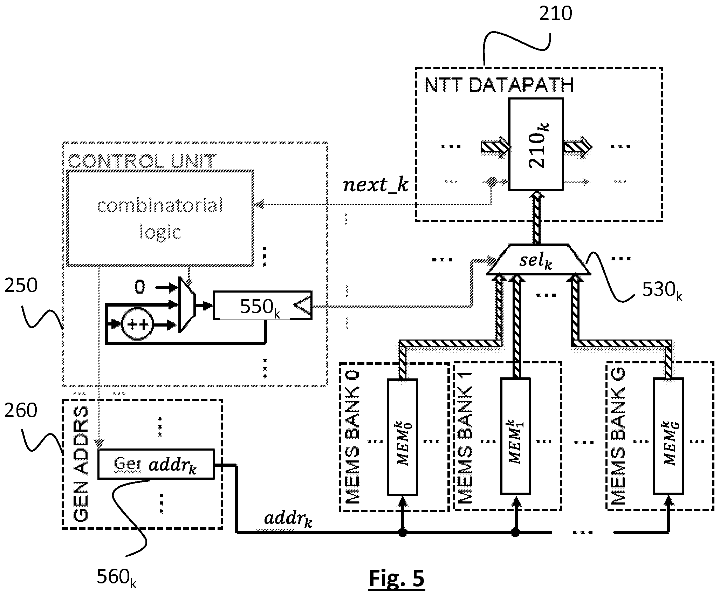

La Fig. 5 représente de manière schématique une opération de lecture dans les bancs de mémoires de la Fig. 2.

On a supposé ici que le module de contrôle paramétrait l'étage $210_k$ du processeur NTT.

L'arrivée d'une nouvelle séquence de $\overline{N}$ blocs de données sur l'étage $210_k$ est identifiée au moyen d'un signal de contrôle $next\_k$. Ce signal incrémente un compteur de bancs de mémoires en lecture, $550_k$, spécifique à l'étage $210_k$. Ce signal commande un multiplexeur de données, $530_k$, à l'entrée de l'étage $210_k$. Par ailleurs, le signal $next\_k$ initialise un générateur élémentaire d'adresses, $560_k$, au sein du module de gestion de lecture, 260. Ce générateur est initialisé par le signal de contrôle $next\_k$ et fournit à chaque cycle d'horloge l'adresse $addr_k$ à lire dans les mémoires $MEM_k^g, \quad g = 0, ..., G$. Les données lues à cette adresse dans les mémoires en question sont sélectionnées au moyen du multiplexeur $530_k$ : seuls les facteurs de rotation lus dans la mémoire $MEM_k^g$ où $g$ est le numéro du banc de mémoires fourni par le compteur $550_k$ sont transmis à l'étage $210_k$.

Ainsi, lorsque la première séquence de blocs de données arrive à l'étage $210_k$, les facteurs de rotation lus de la mémoire $MEM_k^0$ sont fournis à cet étage pour le paramétrer, lorsque la seconde séquence de blocs de données arrive au même étage, les facteurs de rotation lus de la mémoire $MEM_k^1$ lui sont fournis pour le paramétrer, et ainsi de suite. Lorsque l'on atteint la mémoire $MEM_k^G$ du dernier banc de mémoires, $220_G$, le compteur de de bancs de mémoires, $550_k$ est remis à zéro et les facteurs de rotation sont lus à nouveau de la mémoire $MEM_k^0$. Le processus de paramétrage dynamique se poursuit de manière cyclique et ce, pour chaque étage du processeur NTT.

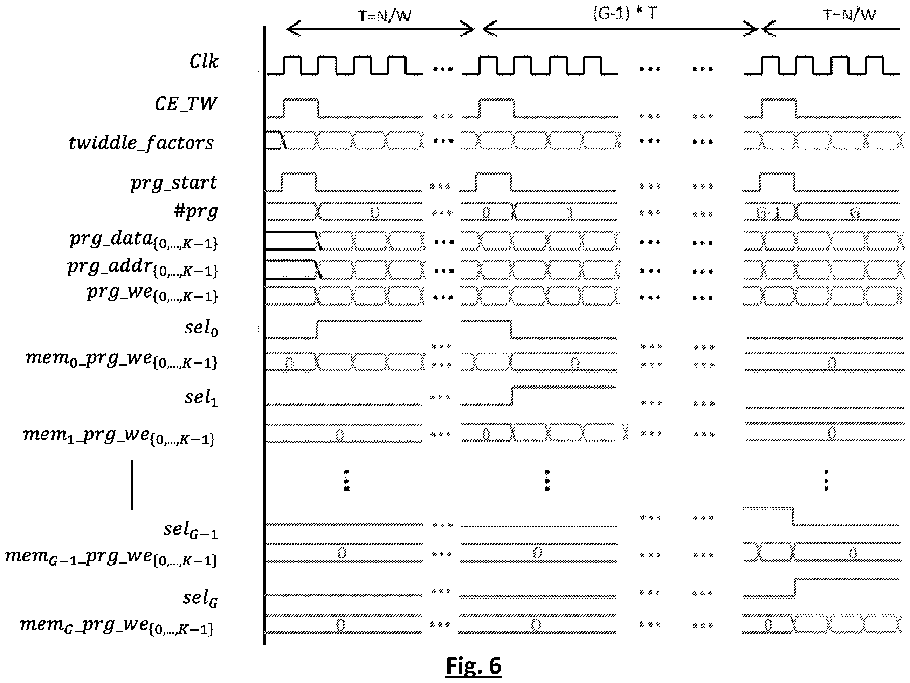

La Fig. 6 représente de manière schématique un chronogramme des signaux de contrôle dans le processeur NTT de la Fig. 2 lors de l'écriture des facteurs de rotation dans les bancs de mémoires.

On a désigné par *Clk* l'horloge de cadencement des blocs (de taille *W*) de facteurs de rotation. Cette même horloge sert également à cadencer l'arrivée des blocs (de taille *W* également) de données.

Le signal *CE_TW* indique au processeur qu'un nouvel ensemble de facteurs de rotation $\Psi_\ell = \{(\psi_\ell)^n, n = 0,...,N - 1\}$ est disponible. Cet ensemble de facteurs de rotation est fourni sous forme de blocs successifs de taille *W*. Cet ensemble de facteurs de rotation se décompose par ailleurs en jeux de facteurs de rotation

$$\Psi_k^\ell, \quad k = 0,...,K-1$$

qui seront stockés respectivement dans les *K* mémoires d'un banc de mémoires et serviront à paramétrer respectivement les étages de traitement $210_k$, $k = 0, ..., K - 1$, lorsque le flux de données à transformer passera par ces étages. Il est important de noter que les facteurs de rotation d'un jeu de facteurs de rotation peuvent être distribués sur plusieurs blocs successifs de $\psi_\ell$.

La ligne *twiddle_factors* représente les facteurs de rotation. À chaque coup d'horloge *Clk,* un bloc de *W* facteurs de rotation est fourni au module de gestion d'écriture 270.

Le signal *prg_start* indique le début de l'écriture d'un ensemble $\psi_\ell$ de facteurs de rotation dans un banc de mémoires.

Le signal *# prg* représente la sortie du compteur de bancs de mémoires en écriture et les signaux *sel_g,* $g = 0, ..., G - 1$ sont les signaux en sortie des comparateurs $440_g$, $g = 0, ..., G - 1$. Lorsqu'un signal *sel_g* est activé (ici niveau logique « 1 »), le banc de mémoires $220_g$ est sélectionné en écriture.

Les *K* signaux $prg\_data_{\{0,...,K-1\}}$ représentent des données à écrire dans les mémoires respectives $MEM_k^g, k = 0,...,K-1$ du banc de mémoires $220_g$ sélectionné en écriture. Plus précisément, ces données apparaissent sur le bus de données qui alimente tous les bancs de mémoires mais ne seront écrites que dans le banc de mémoires sélectionné.

De manière similaire, les *K* signaux $prg\_add_{\{0,...,K-1\}}$ représentent les adresses respectives au sein des mémoires $MEM_k^g, k = 0,...,K-1$ où les données $prg\_data_{\{0,...,K-1\}}$ seront écrites. Plus précisément, ces adresses apparaissent sur le bus d'adresses qui alimente tous les bancs de mémoires mais ne seront utilisées que pour le banc de mémoires sélectionné. Les signaux $mem_g\_prg\_we_{\{0,...,K-1\}}$ sont les commandes d'écriture dans la mémoire $MEM_k^g, k = 0,...,K-1$ sélectionnée. Dans le cas présent, la commande d'écriture $mem_g\_prg\_we_k$ n'est autre que le produit logique $sel_g.prg\_we_k$ : elle déclenche l'écriture de la donnée $prg\_data_k$ à l'adresse $prg\_addr_k$ dans la mémoire $MEM_k^g$ du banc de mémoires sélectionné, $220_g$. Comme rappelé plus haut, lors de l'arrivée d'un bloc de facteurs de rotation, plusieurs mémoires $MEM_k^g, \quad k = 0,...,K-1$ du banc de mémoires sélectionné peuvent être successivement être adressées en écriture.

On comprend de ce chronogramme que les bancs de mémoires sont cycliquement adressés en écriture pour y stocker les ensembles successifs de facteurs de rotation $\psi_\ell$, chaque ensemble étant constitué de jeux de facteurs de rotation

$$\Psi_k^\ell, \quad k = 0, ..., K-1$$

qui sont respectivement stockés dans les mémoires d'un banc de mémoire et respectivement destinés à programmer les différents étages de traitement du processeur NTT par flot.

**Revendications**

1. Processeur NTT, Number Theoretic Transform, par flot comprenant une pluralité $K$ d'étages de traitement ($210_k$) avec k compris entre 0 et K-1, organisés en pipeline (210), chaque étage comprenant un module de permutation suivi d'un module radix, chaque séquence de données à transformer étant fournie au processeur sous la forme de $\overline{N} = N / W$ blocs de données successifs de taille $W$, le résultat de la transformée NTT de cette séquence de données étant également fourni sous la forme d'une séquence de $\overline{N}$ blocs, chaque bloc étant de taille $W$, **caractérisé en ce qu'**il comprend :

   - une pluralité, G+1, de bancs de mémoires ($220_g$), avec g compris entre 0 et G, où $G$ est le nombre maximum de séquences de données à transformer simultanément présentes dans le pipeline, chaque banc de mémoire ($220_g$) étant associée à une transformée NTT de taille $N$ sur un corps donné, $\mathbb{Z}_{p_{\ell'}}$, et comprenant $K$ mémoires ($MEM_k g$) avec k compris entre 0 et K-1, respectivement associées aux $K$ étages de traitement ($210_k$) avec k compris entre 0 et K-1, chaque mémoire étant destinée à stocker un jeu de facteurs de rotation pour paramétrer un étage de traitement ;
   - un module de gestion d'écriture (270) pour recevoir, sous forme d'une séquence de blocs successifs, chaque bloc étant de taille $W$, un ensemble ($\psi_\ell$) de facteurs de rotation relatif à une transformée NTT sur ledit corps $\mathbb{Z}_{p_\ell}$, ledit ensemble étant constitué de $K$ jeux de facteurs de rotation, notés $\psi_k^l$ avec k compris entre 0 et K-1, et pour écrire ces jeux de facteurs de rotation dans les mémoires respectives d'un banc de mémoires, l'écriture étant effectuée de manière cyclique dans les bancs de mémoires, chaque nouvel ensemble de facteurs de rotation étant écrit dans un nouveau banc de mémoire ;
   - un module de gestion de lecture (260) pour lire les jeux de facteurs de rotation au sein des mémoires $(MEM_k^g)$ d'un banc de mémoires ($220_g$) du processeur et à paramétrer les étages de traitement ($210_k$) au fur et à mesure de la progression des blocs de données à travers les étages de traitement ;
   - un module de contrôle (250) pour contrôler le module de gestion d'écriture (270), le module de gestion de lecture (260) ainsi que la progression des blocs de données à travers les étages de traitement.

2. Processeur NTT par flot selon la revendication 1, **caractérisé en ce qu'**il comprend $G + 1$ bancs de mémoires où G=Lat_NTT / T, $Lat\_NTT$ étant la latence de traitement du processeur NTT et $T = N / W$ est le débit de séquences de données en entrée du processeur NTT, chaque banc de mémoire étant associé à la transformée d'une séquence de données et contenant les jeux de facteurs de rotation des étages successifs pour la transformée NTT de cette séquence.

3. Processeur NTT par flot selon la revendication 2, **caractérisé en ce qu'**avant qu'une séquence de données ne passe d'un premier étage de traitement à un second étage de traitement, le module de contrôle (250) commande la lecture du jeu de facteurs de rotation dans la mémoire correspondante associé à ce second étage au sein du banc de mémoires associé à cette séquence, ainsi que la programmation du second étage à l'aide du jeu de facteurs de rotation ainsi lu.

4. Processeur NTT par flot selon la revendication 2 ou 3, **caractérisé en ce que** le module de contrôle (250) comporte un compteur de bancs de mémoire (430), incrémenté à chaque fois qu'un nouvel ensemble de facteurs de rotation est fourni au module de gestion d'écriture (270) et remis à zéro après avoir atteint la valeur $G$, la sortie dudit compteur étant comparée à une pluralité de comparateurs être comparée aux valeurs $g = 0,...,G$, les sorties respectives de ces comparateurs fournissant $G + 1$ signaux de sélection autorisant respectivement une commande d'écriture dans chacun des bancs de mémoires.

5. Processeur NTT par flot selon la revendication 4, **caractérisé en ce que** chaque banc de mémoires associé à la transformation NTT d'une séquence comprend en outre un registre dans lequel est stockée la caractéristique $p_l$ du corps $\mathbb{Z}_{p_\ell}$ dans lequel est effectuée la transformée NTT, la caractéristique du corps étant transmise à un étage de traitement en même temps que les facteurs de rotation lus dans la mémoire associée à cet étage, au sein dudit banc de mémoires.

6. Processeur NTT par flot selon la revendication 5, **caractérisé en ce que** les caractéristiques des corps dans lesquels sont effectuées $L$ transformées NTT de $L$ séquences de données successives sont distincts, où $L \leq G$.

**Patentansprüche**

1. NTT-Flow-Prozessor mit einer Vielzahl $K$ von Verarbeitungsstufen ($210_k$, $k = 0,...,K$ - 1), die als Pipeline (210) organisiert sind, wobei jede Stufe einen Permutationsmodul, gefolgt von einem Radixmodul, umfasst, wobei dem Prozessor jede zu transformierende Datensequenz in Form von $\overline{N} = N / W$ aufeinanderfolgenden Datenblöcken der Größe $W$ bereitgestellt wird, wobei das Ergebnis der NTT-Transformation dieser Datensequenz ebenfalls in Form einer Sequenz von $\overline{N}$ Blöcken bereitgestellt wird, wobei jeder Block die Größe $W$ hat, **dadurch gekennzeichnet, dass** er enthält:

   - eine Vielzahl ($G$ + 1) von Speicherbänken ($220_g$, $g = 0, ..., G$), wobei $G$ die maximale Anzahl von gleichzeitig in der Pipeline vorhandenen, zu transformierenden Datensequenzen ist, wobei jede Speicherbank ($220_g$) einer NTT-Transformation der Größe $N$ auf einem gegebenen Körper $\mathbb{Z}_{p_{\ell}}$ zugeordnet ist und $K$ Speicher $\left( MEM_k^g \, , \; k = 0,...,K-1 \right)$ enthält, die den jeweiligen $K$ Verarbeitungsstufen ($210_k$, $k = 0, ..., K$ - 1) zugeordnet sind, wobei jeder Speicher dazu bestimmt ist, einen Satz von Rotationsfaktoren abzuspeichern, um eine Verarbeitungsstufe zu parametrieren;
   - ein Schreibverwaltungsmodul (270) zum Empfangen, in Form von einer Sequenz aufeinanderfolgender Blöcke, wobei jeder Block die Größe $W$ hat, einer Menge ($\psi_{\ell}$) von Rotationsfaktoren bezüglich einer NTT-Transformation auf dem Körper $\mathbb{Z}_{p_{\ell}}$, wobei die Menge aus $K$ Sätzen von Rotationsfaktoren ($\Psi_k^{\ell}$ $k = 0, ..., K$ - 1) besteht, und zum Einschreiben dieser Sätze von Rotationsfaktoren in die jeweiligen Speicher einer Speicherbank, wobei das Einschreiben in die Speicherbänke zyklisch erfolgt, wobei jede neue Menge von Rotationsfaktoren in eine neuer Speicherbank eingeschrieben wird;
   - ein Leseverwaltungsmodul (260) zum Auslesen der Sätze von Rotationsfaktoren aus den Speichern $\left( MEM_k^g \right)$ einer Speicherbank ($220_g$) des Prozessors und zum Parametrisieren der Verarbeitungsstufen ($210_k$) je nach Fortschreiten der Datenblöcke durch die Verarbeitungsstufen;
   - ein Steuermodul (250) zum Steuern des Schreibverwaltungsmoduls (270), des Leseverwaltungsmoduls (260) sowie des Fortschreitens der Datenblöcke durch die Verarbeitungsstufen.

2. NTT-Flow-Prozessor nach Anspruch 1, **dadurch gekennzeichnet, dass** er $G$ + 1 Speicherbänke umfasst, wobei $G = \lceil Lat\_NTT / T \rceil$, $Lat\_NTT$ die Verarbeitungslatenz des NTT-Prozessors und $T = N / W$ die Datensequenzrate am Eingang des NTT-Prozessors ist, wobei jede Speicherbank der Transformation einer Datensequenz zugeordnet ist und die Sätze von Rotationsfaktoren der aufeinanderfolgenden Stufen für die NTT-Transformation dieser Sequenz enthält.

3. NTT-Flow-Prozessor nach Anspruch 2, **dadurch gekennzeichnet, dass** vor dem Übergehen einer Datensequenz von einer ersten Verarbeitungsstufe zu einer zweiten Verarbeitungsstufe das Steuermodul (250) das Auslesen des Satzes von Rotationsfaktoren aus dem entsprechenden, dieser zweiten Stufe zugeordneten Speicher innerhalb der dieser Sequenz zugeordneten Speicherbank sowie die Programmierung der zweiten Stufe mit Hilfe des so ausgelesenen Satzes von Rotationsfaktoren steuert.

4. NTT-Flow-Prozessor nach Anspruch 2 oder 3, **dadurch gekennzeichnet, dass** das Steuermodul (250) einen Speicherbankzähler (430) enthält, der immer dann inkrementiert wird, wenn dem Schreibverwaltungsmodul (270) ein neuer Satz von Rotationsfaktoren bereitgestellt wird, und der nach Erreichen des Wertes $G$ zurückgesetzt wird, wobei der Ausgang des Zählers mittels einer Vielzahl von Komparatoren mit den Werten $g = 0,...,G$ verglichen wird, wobei die jeweiligen Ausgänge dieser Komparatoren $G$ + 1 Auswahlsignale liefern, die einen jeweiligen Schreibbefehl in jede der Speicherbänke zulassen.

5. NTT-Flow-Prozessor nach Anspruch 4, **dadurch gekennzeichnet, dass** jede der NTT-Transformation einer Sequenz zugeordnete Speicherbank ferner ein Register umfasst, in dem die Eigenschaft ($p_\ell$) des Körpers $\mathbb{Z}_{p_\ell}$ abgespeichert ist, bei dem die NTT-Transformation erfolgt, wobei die Charakteristik des Körpers zusammen mit den Rotationsfaktoren, die aus dem dieser Stufe zugeordneten Speicher innerhalb der Speicherbank ausgelesen werden, an eine Verarbeitungsstufe übertragen wird.

6. NTT-Flow-Prozessor nach Anspruch 5, **dadurch gekennzeichnet, dass** die Eigenschaften der Körper, bei denen $L$ NTT-Transformationen von $L$ aufeinanderfolgenden Datensequenzen erfolgen, verschieden sind, wobei $L \leq G$.

**Claims**

1. A stream-based NTT, Number Theoretic Transform, processor comprising a plurality $K$ of processing stages ($210_k$) with k comprised between 0 and K-1, organised in pipeline (210), each stage comprising a permutation module followed by a radix module, each sequence of data to be transformed being provided to the processor under the form of $\overline{N} = N /W$ successive data blocks of size $W$, the result of the NTT transform of this data sequence also being provided in the form of a sequence of $\overline{N}$ blocks, each block being of size $W$, **characterised in that** it comprises:

   - a plurality, $G + 1$, of memory banks ($220_g$), with g comprised between 0 and G , where $G$ is the maximum number of data sequences to be transformed simultaneously present in the pipeline, each memory bank ($220_g$) being associated with an NTT transform of size $N$ over a given body, $\mathbb{Z}_{p\ell}$ , and comprising $K$ memories ($MEM_k^g$) with k comprised between 0 and K-1, respectively associated with the $K$ processing stages ($210_k$) with k comprised between 0 and K-1 each memory being intended to store a set of rotation factors to parameterise a processing stage;
   - a write management module (270) for receiving, in the form of a sequence of successive blocks, each block being of size $W$, an assembly ($\psi_\ell$) of rotation factors relating to an NTT transform on said body $\mathbb{Z}_{p\ell}$ , said assembly consisting of $K$ sets of rotation factors, denoted $\Psi_k^\ell$ with k comprised between 0 and K-1, and for writing these sets of rotation factors into the respective memories of a memory bank, the writing being performed cyclically in the memory banks, each new set of rotation factors being written to a new memory bank;
   - a read management module (260) for reading the sets of rotation factors within the memories ($MEM_k^g$) of a memory bank ($220_g$) of the processor and for configuring the processing stages ($210_k$) as the data blocks progress through processing stages;
   - a control module (250) to control the write management module (270), the read management module (260) as well as the progression of the data blocks through the processing stages.

2. The stream-based NTT processor according to claim 1, **characterised in that** it comprises $G + 1$ memory banks where G = LAT_NTT/T, *Lat_NTT* being the processing latency of the NTT processor and $T = N / W$ is the data sequence rate at the input of the NTT processor, each memory bank being associated with the transform of a data sequence and containing the sets of rotation factors of the successive stages for the NTT transform of this sequence.

3. The stream-based NTT processor according to claim 2, **characterised in that** before a data sequence passes from a first processing stage to a second processing stage, the control module (250) controls the reading of the set of rotation factors in the corresponding memory associated with this second stage within the memory bank associated with this sequence, as well as the programming of the second stage using the set of rotation factors thus read.

4. The stream-based NTT processor according to claim 2 or 3, **characterised in that** the control module (250) includes a memory bank counter (430), incremented each time a new set of rotation factors is provided to the write management module (270) and reset to zero after having reached the value $G$ , the output of said counter being compared with a plurality of comparators be compared with the values $g$ = 0, ..., $G$, the respective outputs of these comparators providing $G + 1$ selection signals respectively authorising a control for writing in each of the memory banks.

5. The stream-based NTT processor by according to claim 4, **characterised in that** each memory bank associated with the NTT transformation of a sequence further comprises a register wherein is stored the feature $p_\ell$ of the body $\mathbb{Z}_{p\ell}$ wherein the NTT transformation is carried out, the feature of the body being transmitted to a processing stage at the same time as the rotation factors read in the memory associated with this stage, within said memory bank.

6.  The stream-based NTT processor according to claim 5, **characterised in that** the features of the bodies wherein $L$ NTT transforms of $L$ successive data sequences are carried out are distinct, where $L \leq G$.

EP 3 803 636 B1

**Fig. 1**

**Fig. 2**

**Fig. 3**

**Fig. 4**

EP 3 803 636 B1

EP 3 803 636 B1

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8321823 B

- FR 1856340

**Littérature non-brevet citée dans la description**

- **J.M. POLLARD.** The fast Fourier transform in a finite field. *Mathematics of Computation,* Avril 1971, vol. 25 (114), 365-374
- **W. DAI et al.** Accelerating NTRU based homomorphic encryption using GPUs. *Proc. of IEEE High Performance Extreme Computing Conference (HPEC),* 09 Septembre 2014

- **D.B. COUSINS et al.** Designing an FGPA-accelerated homomorphic encryption coprocessor. *IEEE Trans. on Emerging Topics in Computing.,* Avril 2017, vol. 5 (2), 193-206